# EUROPEAN PATENT APPLICATION

(11) **EP 3 789 927 A1**
(43) Date of publication of application: **10.03.2021**
(21) Application number: 20187121.7
(22) Date of filing: 22.07.2020
(51) Int. Cl.: G06N 3/04, G06N 3/08

(54) **METHOD OF MANAGING DATA**

(30) Priority: 26.07.2019 KR 20190091058
(71) Applicant: Sualab Co., Ltd., Seoul 06655 (KR)
(72) Inventor: Joo, Mingyu, 08740 Seoul (KR)
(74) Representative: Frenkel, Matthias Alexander

(57) **Abstract**

According to an exemplary embodiment of the present disclosure, a computer program stored in a computer readable storage medium is disclosed. The computer program may include instructions for causing one or more processors to perform the following steps, the steps including: generating two or more training datasets from an entire dataset - in which each of the two or more training datasets includes at least one pair of sampled dataset, in which each of at least one pair of sampled dataset includes different data subset -; and training a plurality of inference models including one or more network functions, based on the two or more training dataset.

## Description

### CROSS-REFERENCE TO RELATED APPLICATIONS

This application claims priority to and the benefit of Korean Patent Application No. 10-2019-0091058 filed in the Korean Intellectual Property Office on JULY 26, 2019, the entire contents of which are incorporated herein by reference.

### TECHNICAL FIELD

The present disclosure relates to a method of processing data by using a computing device, and particularly, to a learning data management solution of a machine learning model.

### BACKGROUND ART

According to the development of the artificial intelligence technology based on machine learning, the importance of the data required to train a machine learning model is growing day by day. For example, it is known that at least 100 million pixelwise label images are required for autonomous vehicles. The importance of the data is represented by Garbage-In Garbage-Out (GIGO).

Everyone agrees on the importance of the data, but the solution to what kind of data and how much data should be collected is not clear. Accordingly, for those skilled in the art, there may be a need for a solution to establish a required data collection strategy about the training of a machine learning model.

US Patent Application No. 16/027,161 discloses a method for selecting machine learning training data.

### SUMMARY OF THE INVENTION

The present disclosure is conceived in response to the background art, and has been made to provide a learning data collecting solution of a machine learning model.

The technical objects of the present disclosure are not limited to the foregoing technical objects, and other non-mentioned technical objects will be clearly understood by those skilled in the art from the description below.

According to an exemplary embodiment of the present disclosure for achieving the object, a computer program stored in a computer readable storage medium is disclosed. The computer program may include instructions for causing one or more processors to perform the following steps, the steps including: generating two or more training datasets from an entire dataset - in which each of the two or more training datasets includes at least one pair of sampled dataset, and wherein each of at least one pair of sampled dataset includes different data subset -; and training a plurality of inference models including one or more network functions, based on the two or more training dataset.

Each of the two or more training datasets may include a training dataset and a validation dataset.

The generating of two or more training datasets from entire dataset may include: dividing the entire dataset into M subsets; and allocating at least one subset of the divided M subsets as a test dataset.

The generating of two or more training datasets from the entire dataset may include allocating random data, which is randomly selected not to include same data, as a test dataset.

The generating of two or more training datasets from the entire dataset may include: dividing a dataset, excluding the test dataset among the entire dataset, into N subsets; and allocating at least one subset of the divided N subsets as a validation dataset.

According to an exemplary embodiment of the present disclosure for achieving the object, a computer program stored in a computer readable storage medium is disclosed. The computer program may include instructions for causing one or more processors to perform the following steps, the steps including: generating a plurality of inference results of random data, based on a plurality of inference models including one or more network functions which are trained based on two or more training data; and providing a corresponding relationship between a plurality of inference results and ground truth of the random data.

The inference result may include a classification result that the inference model infers about the random data, and a confidence score which is related to the classification result.

The providing of a corresponding relationship between a plurality of inference results and ground truth of the random data may include: determining a single inference result for the random data based on a plurality of inference results for the random data; and providing a corresponding relationship between the single inference result 700 and the ground truth.

The steps may further include providing an evaluation result of the random data.

The providing of an evaluation result of the random data may include: providing the evaluation result of the random data, based on the plurality of inference results and corresponding ground truth.

The providing of the evaluation result of the random data, based on the plurality of inference results and corresponding ground truth may include: computing an inference reliability value of the random data, based on the plurality of inference results; and providing an evaluation result corresponding to whether a label labeled to the random data corresponds to the ground truth and corresponding to the inference reliability value.

The plurality of inference models may include two or more network functions including different forms.

According to an exemplary embodiment of the present disclosure for achieving the object, a computing device for establishing a data collection strategy is disclosed. The computing device may include: a processor; a network unit; and a storage unit, in which the processor may be configured to: generate two or more training datasets from entire dataset, each of the two or more training datasets including at least one pair of sampled dataset, each of at least one pair of sampled dataset including different data subset; and train a plurality of inference models including one or more network functions, based on the two or more training dataset.

According to an exemplary embodiment of the present disclosure for achieving the object, a computing device for establishing a data collection strategy is disclosed. The computing device may include: a processor; a network unit; and a storage unit, in which the processor may be configured to: generate a plurality of inference results of a random data, based on a plurality of inference models including one or more network functions which are trained based on two or more training data; and provide a corresponding relationship between a plurality of inference results and ground truth of the random data.

The technical solutions obtainable from the present disclosure are not limited to the foregoing solutions, and other non-mentioned solution will be clearly understood by those skilled in the art from the description below.

The present disclosure relates to a data collection solution for training a machine learning model.

The effects obtainable from the present disclosure are not limited to the foregoing effects, and other non-mentioned effects will be clearly understood by those skilled in the art from the description below.

### BRIEF DESCRIPTION OF THE DRAWINGS

Various aspects are described about the drawings, and herein, like reference numerals are generally used to designate like constituent elements. In the exemplary embodiment below, for description, a plurality of specific and detailed matters is suggested to provide a general understanding of one or more aspects. However, the aspect(s) may be carried out without the specific and detailed matters.
FIG. 1 is a block diagram illustrating a configuration of a computing device establishing a data collection strategy according to an exemplary embodiment of the present disclosure.
FIG. 2 is a schematic diagram illustrating a part of an artificial neural network according to an exemplary embodiment of the present disclosure.
FIG. 3 is a flowchart illustrating an example in which a processor of the computing device trains a plurality of inference models according to an exemplary embodiment of the present disclosure.
FIG. 4 is a diagram illustrating an example in which the processor of the computing device generates a plurality of training datasets from an entire dataset according to an exemplary embodiment of the present disclosure.
FIG. 5 is a flowchart illustrating an example in which the processor of the computing device generates a plurality of training datasets according to an exemplary embodiment of the present disclosure.
FIG. 6 is a diagram illustrating an example in which the processor of the computing device generates a plurality of inference models according to an exemplary embodiment of the present disclosure.
FIG. 7 is a flowchart illustrating an example in which the processor of the computing device establishes a data collection strategy according to an exemplary embodiment of the present disclosure.
FIG. 8 is a diagram illustrating an example in which the processor of the computing device generates a plurality of inference results according to an exemplary embodiment of the present disclosure.
FIG. 9 is a flowchart illustrating an example in which the processor of the computing device provides a corresponding relationship between a plurality of inference results and an actual result for random data according to an exemplary embodiment of the present disclosure.
FIG. 10 is a diagram illustrating an example in which the processor of the computing device generates a confidence score according to an exemplary embodiment of the present disclosure.
FIG. 11 is a flowchart illustrating an example in which the processor of the computing device provides an evaluation result for random data according to an exemplary embodiment of the present disclosure.
FIG. 12 is a diagram illustrating an example in which the processor provides an evaluation result for random data according to an exemplary embodiment of the present disclosure.
FIG. 13 is a simple and general schematic diagram for an example of a computing environment in which several exemplary embodiments of the present disclosures are implementable.

### DETAILED DESCRIPTION

Terms, "component", "module", "system", and the like used in the present specification are compatibly usable with one another and indicate a computer-related entity, hardware, firmware, software, a combination of software and hardware, or execution of software. For example, a component may be a procedure executed in a processor 110, a processor 110, an object, an execution thread, a program, and/or a computer, but is not limited thereto. For example, both an application executed in a computing device 100 and the computing device 100 may be components. One or more components may reside within a processor 110 and/or an execution thread. One component may be localized within one computer. One component may be distributed between two or more computers. Further, the components may be executed by various computer readable media having various data structures stored therein. For example, components may communicate through local and/or remote processing according to a signal (for example, data transmitted to another system through a network, such as the Internet, through data and/or a signal from one component interacting with another component in a local system and a distributed system) having one or more data packets.

A term "or" intends to mean comprehensive "or", not exclusive "or". That is, unless otherwise specified or when it is unclear in context, "X uses A or B" intends to mean one of the natural comprehensive substitutions. That is, when X uses A, X uses B, or X uses both A and B, "X uses A or B" may be applied to anyone among the cases. Further, a term "and/or" used in the present specification shall be understood to designate and include all of the possible combinations of one or more items among the listed relevant items.

A term "include" and/or "including" shall be understood as meaning that a corresponding characteristic and/or a constituent element exists. Further, a term "include" and/or "including" means that a corresponding characteristic and/or a constituent element exists, but it shall be understood that the existence or an addition of one or more other characteristics, constituent elements, and/or a group thereof is not excluded. Further, unless otherwise specified or when it is unclear that a single form is indicated in the context, the singular shall be construed to generally mean "one or more" in the present specification and the claims.

Those skilled in the art shall recognize that the various illustrative logical blocks, configurations, modules, circuits, means, logic, and algorithm operations described the exemplary embodiments additionally disclosed herein may be implemented by electronic hardware, computer software, or in a combination of electronic hardware and computer software. To exemplify the interchangeability of hardware and software, the various illustrative components, blocks, configurations, means, logic, modules, circuits, and operations have been generally described above in the functional aspects thereof. Whether the functionality is implemented as hardware or software depends on a specific application or design restraints given to the general system. Those skilled in the art may implement the functionality described by various methods for each of the specific applications. However, it shall not be construed that the determinations of the implementation deviate from the range of the contents of the present disclosure.

The description of the presented exemplary embodiments is provided so as for those skilled in the art to use or carry out the present invention. Various modifications of the exemplary embodiments will be apparent to those skilled in the art. General principles defined herein may be applied to other exemplary embodiments without departing from the scope of the present disclosure. Therefore, the present invention is not limited to the exemplary embodiments presented herein. The present invention shall be interpreted within the broadest meaning range consistent with the principles and new characteristics presented herein.

In an exemplary embodiment of the present disclosure, a server may also include other configurations for performing a server environment of the server. The server may include any type of device. The server is a digital device and may be a digital device, such as a laptop computer, a notebook computer, a desktop computer, a web pad, and a mobile phone, which is mounted with a processor 110, includes a memory, and has calculation ability. The server may be a web server processing a service. The foregoing kind of server is merely an example, and the present disclosure is not limited thereto.

In the present specification, a network function may be exchanged with an artificial neural network 200 and a neural network. In the present specification, the network function may also include one or more neural networks, and in this case, an output of the network function may be an ensemble of an output of one or more neural networks.

In the present specification, a model may include a network function. The model may also include one or more network functions, and in this case, an output of the model may be an ensemble of an output of one or more neural networks.

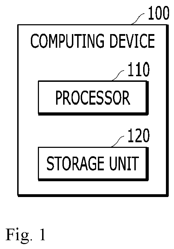

FIG. 1 is a block diagram illustrating a configuration of a computing device establishing a data collection strategy according to an exemplary embodiment of the present disclosure.

A computing device 100 may include a processor 110 and a storage unit 120. The processor 110 may be formed of one or more cores, and may include the processor 110, such as a Central Processing Unit (CPU), a General Purpose Graphics Processing Unit (GPGPU), and a Tensor Processing Unit (TPU) of the computing device 100, for establishing a data collection strategy. The processor 110 may read a computer program stored in the storage unit 120 and perform a data collection strategy establishing method according to an exemplary embodiment of the present disclosure. According to the exemplary embodiment of the present disclosure, the processor 110 may perform a calculation for training a neural network 200. The processor 110 may perform a calculation, such as processing of input data for learning in Deep Learning (DN), extraction of a feature from input data, an error calculation, updating of a weighted value of a neural network by using backpropagation, for training the neural network 200.

At least one of the CPU, GPGPU, and TPU of the processor 110 may generate a training dataset 400 and process the training of a plurality of inference models 500. Further, in the exemplary embodiment of the present disclosure, a plurality of inference results 600 using a trained model may be generated and a corresponding relationship between the plurality of inference results 600 and an actual result (ground truth) may be provided by using the processors 110 of the plurality of computing devices 100 together. Further, the computer program executed in the computing device 100 according to the exemplary embodiment of the present disclosure may be a CPU, GPGPU, or TPU executable program.

The storage unit 120 may store a computer program for performing the data collection strategy establishing method according to the exemplary embodiment of the present disclosure, and the stored computer program may be read and driven by the processor 110.

The storage unit 120 according to the exemplary embodiment of the present disclosure may store a program for an operation of the processor 110, and may also temporarily or permanently store input/output data (for example, service entrance information, user information, and replacement service access information). The storage unit 120 may store data for a display and a sound. The storage unit 120 may include at least one type of storage medium among a flash memory type, a hard disk type, a multimedia card micro type, and the card type of memory (for example, an SD or XD memory), a Random Access Memory (RAM), a Static Random Access Memory (SRAM), a Read-Only Memory (ROM), an Electrically Erasable Programmable Read-only Memory (EEPROM), a Programmable Read-Only Memory (PROM), a magnetic memory, a magnetic disk, and an optical disk.

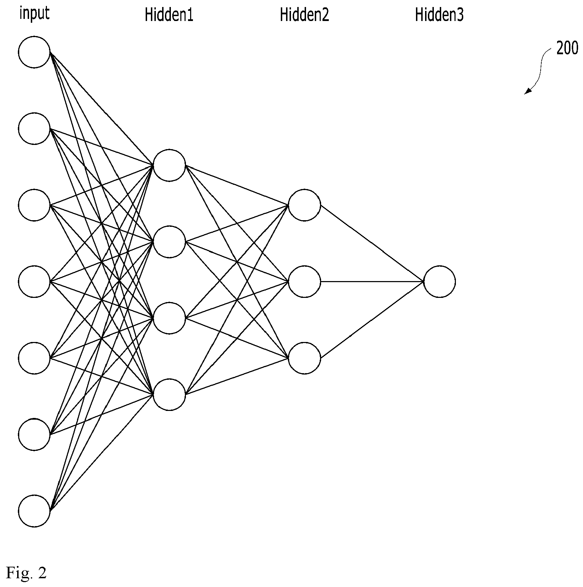

FIG. 2 is a schematic diagram illustrating a part of an artificial neural network according to an exemplary embodiment of the present disclosure.

Throughout the present specification, the neural network 200, a network function, and a neural network may be used as the same meaning. The neural network 200 may consist of a set of interconnected computational units, which may generally be referred to as "nodes". The "nodes" may also be called "neurons". The neural network 200 consists of one or more nodes. The nodes (or neurons) configuring the neural network 200 may be interconnected by one or more "links".

In the neural network 200, one or more nodes connected through the links may relatively form a relation of an input node and an output node. The concept of the input node is relative to the concept of the output node, and a predetermined node having an output node relationship with respect to one node may have an input node relationship in a relationship with another node, and a reverse relationship is also available. As described above, the relationship between the input node and the output node may be generated based on the link. One or more output nodes may be connected to one input node through a link, and a reverse case may also be valid.

In the relationship between an input node and an output node connected through one link, a value of the output node may be determined based on data input to the input node. Herein, a node connecting the input node and the output node may have a weight. The weighted value is variable, and for the neural network 200 to perform a desired function, the weighted value may be varied by a user or an algorithm. For example, when one or more input nodes are connected to one output node by links, respectively, a value of the output node may be determined based on values input to the input nodes connected to the output node and weights set in the link corresponding to each of the input nodes.

As described above, in the neural network 200, one or more nodes are connected with each other through one or more links to form a relation of an input node and an output node in the neural network 200. A characteristic of the neural network 200 may be determined according to the number of nodes and links in the neural network 200, a correlation between the nodes and the links, and a weighted value assigned to each of the links. For example, when there are two neural networks 200 in which the numbers of nodes and links are the same and the weighted values between the links are different, the two neural networks 200 may be recognized to be different from each other.

As illustrated in FIG. 2, the neural network 200 may consist of one or more nodes. Some of the nodes configuring the neural network 200 may form one layer based on distances from an initial input node. For example, a set of nodes having a distance of n from an initial input node may form n layers. The distance from the initial input node may be defined by the minimum number of links, which needs to be passed from the initial input node to a corresponding node. However, the definition of the layer is arbitrary for the description, and a degree of the layer in the neural network 200 may be defined by a different method from the foregoing method. For example, the layers of the nodes may be defined by a distance from a final output node.

The initial input node may mean one or more nodes to which data is directly input without passing through a link in a relationship with other nodes among the nodes in the neural network 200. Otherwise, the initial input node may mean nodes that do not have other input nodes connected through the links in a relation between the nodes based on the link in the neural network 200. Similarly, the final output node may mean one or more nodes that do not have an output node in a relationship with other nodes among the nodes in the neural network 200. Further, the hidden node may mean nodes configuring the neural network 200, not the initial input node and the final output node. In the illustration of FIG. 2, the output node is omitted. In the neural network 200 according to the exemplary embodiment of the present disclosure, the number of nodes of the input layer may be larger than the number of nodes of the hidden layer close to the output layer, and the neural network 200 may be the neural network 200 in the form that the number of nodes decreases from the input layer to the hidden layer.

A deep neural network (DNN) 200 may mean the neural network 200 including a plurality of hidden layers, besides an input layer and an output layer. When the DNN is used, it is possible to recognize a latent structure of data. That is, it is possible to recognize the latent structures of pictures, texts, videos, voices, and music (for example, an object included in the picture, the contents and the emotion of the text, and the contents and the emotion of the voice). The DNN may include a convolutional neural network (CNN), a recurrent neural network (RNN), a restricted Boltzmann machine (RBM), a deep belief network (DBN), a Q network, a U network, Siamese network, and the like.

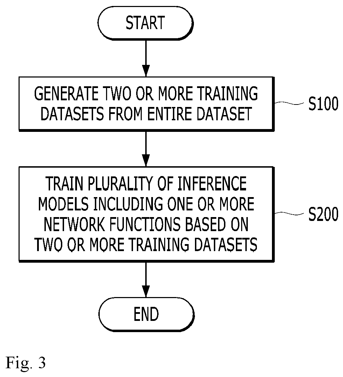

FIG. 3 is a flowchart illustrating an example in which a processor of a computing device trains a plurality of inference models according to an exemplary embodiment of the present disclosure.

Referring to FIG. 3, the processor 110 may generate two or more training datasets 400 from an entire dataset 300 (S100).

The processor 110 may generate the training dataset 400 including at least one pair of sampled datasets including different data subsets.

According to several exemplary embodiments of the present disclosure, the training dataset 400 may include data, such as the entire dataset 300. The training dataset 400 may include a training dataset, a validation dataset, a validation dataset, and a test dataset as the data subset. However, the training dataset, the validation dataset, and the test dataset configuring the training dataset 400 may be one or more mutually exclusive data subsets. However, the data subset may be sampled from the entire dataset 300. That is, the training dataset 400 may consist of the pair of sampled data subsets.

Herein, the entire dataset 300 may be defined as the entire data for training an inference model 500 according to the present disclosure. According to several exemplary embodiments of the present disclosure, the entire dataset 300 may have been labeled already. The labeling for the entire dataset 300 may be performed manually or by a classifier/classification model trained for labeling.

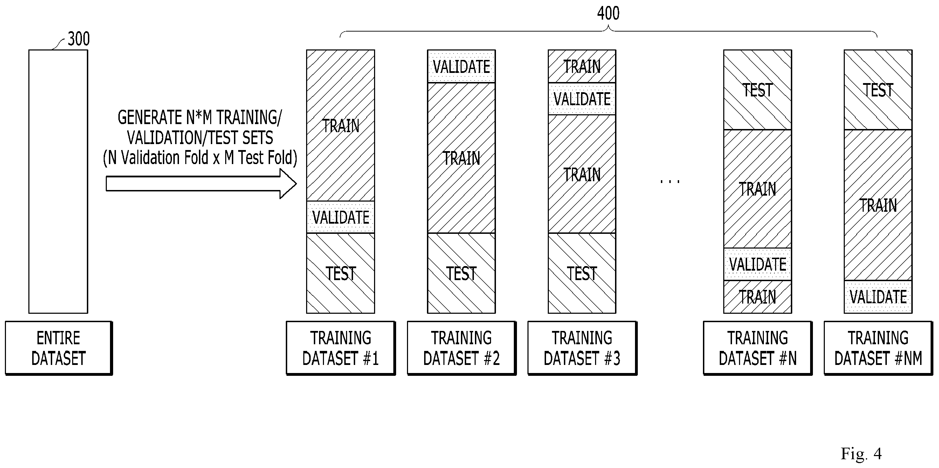

To generate the plurality of inference models 500, the plurality of training datasets 400 may be derived from the entire dataset 300. The training dataset 400 will be described in detail regarding FIG. 4.

In general, the dataset for training the network function, which is similar to the inference models 500 according to the present disclosure is set to have a fixed test set. This is to objectively evaluate the performance of the trained network function. Accordingly, the fixed test set does not present a perspective on the data, but simply presents only a perspective on the performance of the model.

In contrast to this, when the plurality of inference models 500 is trained based on the training dataset 400 consisting of the pair of different data subsets, the plurality of inference models 500 performs a test for the data included in the entire dataset 300. As a result, prediction accuracy and training efficiency for each of the data included in the entire dataset 300 may be recognized. That is, it is possible to recognize what types of data are well trained or not trained. Accordingly, each of the training datasets has a pair of different data subsets to allow a user to obtain a perspective for establishing a data collection strategy.

The processor 110 may train the plurality of inference models 500 including one or more network functions based on the two or more generated training datasets 400 (S200).

The processor 110 may generate the plurality of inference models 500 which is to evaluate each of the data included in the entire dataset 300 by training the plurality of inference models 500.

The processor 110 according to the present disclosure may train the plurality of inference models 500 based on the plurality of training datasets 400. The processor 110 may evaluate each of the data by synthesizing the plurality of prediction results generated from the plurality of inference models 500, which will be described below.

The processor 110 may use an ensemble method for synthesizing the plurality of prediction results. Herein, the ensemble method may be defined as a method of creating several prediction models based on given data and creating one final prediction model by synthesizing the several prediction models.

The processor 110 according to the present disclosure may use average, majority vote, Bayesian interference, and the like as a particular method for implementing the ensemble method. The particular method for implementing the ensemble method is merely an example, and the present disclosure is not limited thereto.

The plurality of inference models 500 corresponds to the plurality of training datasets 400, respectively. Each of the plurality of inference models 500 is trained based on training data in the pair of data subsets included in the training dataset 400. Several inference models 500 may be generated from one training dataset 400, and in this case, the processor 110 may determine the kind of model which is to be provided as one of the plurality of inference models 500 for implementing the method of establishing the data collection strategy according to the present disclosure based on the validation data. Each of the plurality of determined inference models 500 may generate an inference result for the entire dataset 300. Herein, the inference result may include a classification result (for example, a label) for specific data and a confidence score for the corresponding classification result. However, the classification result and the confidence score are merely the examples for the inference result, and the data which may be included in the inference result is not limited thereto.

Herein, the confidence score may be defined as a probability for each label settable for random data. For example, for image A, when a probability that image A is classified as "dog" is 0.4 and a probability that image A is classified as "cat" is 0.6, a confidence score of image A may be 0.4 for a dog, and may be 0.6 for a cat. The foregoing confidence score is merely an example, and the present disclosure is not limited thereto.

When the plurality of inference models 500 is trained based on the training dataset 400 consisting of the pair of different data subsets, the plurality of inference models 500 performs a test on the data included in the entire dataset 300. As a result, the plurality of models which is capable of evaluating the current entire dataset 300 may be generated. Accordingly, the user related to the data collection method according to the present disclosure may obtain a perspective for establishing the data collection strategy.

FIG. 4 is a diagram illustrating an example in which the processor of the computing device generates a plurality of training datasets from entire dataset according to an exemplary embodiment of the present disclosure.

To generate the plurality of training datasets 400 from one dataset, a K-fold cross-validation method may be generally used. The K-fold cross-validation may be defined as a method of dividing a dataset into several subsets and using each subset as a test set or a validation set and using a subset that is not the test set or the validation set as a training set. The K-fold cross-validation may be useful when data for training the model is not sufficient.

In the method of establishing the data collection strategy according to the present disclosure, the test dataset may also be variably set as described above.

Accordingly, each of the training datasets 400 may include different training datasets, validation datasets, and test datasets.

Herein, according to several exemplary embodiments of the present disclosure, the processor 110 may allocate random data, which is randomly selected so as not to include the same data, as the test dataset when generating two or more training datasets 400 from the entire dataset 300. That is, the test dataset of each training dataset 400 may be mutually exclusive.

When the plurality of test datasets is configured as described above, all of the data included in the entire dataset 300 undergo all of training, validation, and test operations by the inference model 500 at least once. That is, each of the data included in the entire dataset may be included in each of the training dataset, the validation dataset, and the test dataset in the plurality of training datasets.

As a result, prediction accuracy for each of the data included in the entire dataset 300 may be recognized. That is, it is possible to recognize what types of data are well trained or not trained. Accordingly, each training dataset has the pair of different data subsets, so that each data may be used for all of the training, the validation, and the test, thereby allowing the user to obtain a perspective for establishing a data collection strategy.

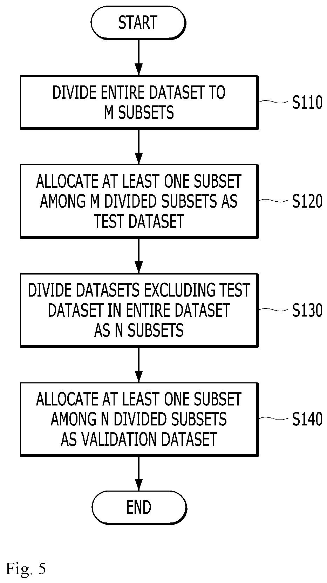

FIG. 5 is a flowchart illustrating an example in which the processor of the computing device generates a plurality of training datasets according to an exemplary embodiment of the present disclosure.

Referring to FIG. 5, the processor 110 may divide the entire dataset into M subsets (S110).

The processor 110 may allocate at least one subset among the M divided subsets as a test dataset (S 120).

This is for an example for selecting the test dataset for performing the M-fold cross test. Accordingly, the particular method for generating the test dataset is not limited thereto.

The processor 110 may divide a dataset excluding the test dataset in the entire dataset 300 into N subsets (130).

The processor 110 may allocate at least one subset among the N divided subsets as a validation dataset (S140).

As described above, the data subsets included in the training dataset 400 are mutually exclusive. That is, the same data cannot be included. Accordingly, when the test dataset is first determined, the processor 110 may perform the N-fold cross validation on the remaining portions and allocate the validation dataset. When both the test dataset and the validation dataset are allocated, the processor 110 may allocate all of the remaining data which have not been allocated as the training dataset. That is, each of the training datasets 400 may consist of the training dataset, the test dataset, and the validation dataset. The test dataset included in each training dataset 400 may be mutually exclusive. The validation dataset included in each training dataset 400 may be mutually exclusive.

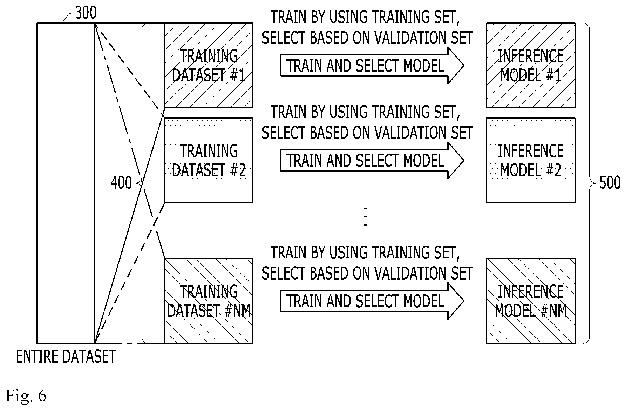

FIG. 6 is a diagram illustrating an example in which the processor of the computing device generates a plurality of inference models according to an exemplary embodiment of the present disclosure.

The processor 110 may generate the plurality of inference models 500 based on two or more training datasets 400. As described above, one or more inference models 500 may be generated for one training dataset 400. In this case, the inference model 500 which may be the one among the plurality of inference models 500 may be determined based on a validation dataset.

Herein, the form of the network function of each of the plurality of inference models 500 may be different. As widely known, the form of the network function for implementing deep learning may be various. Accordingly, the plurality of inference models 500 may be formed of the same network function or the different network functions.

When the form of the network function of the inference model 500 is variously formed, it is possible to obtain the results through various models for the same data. In the establishment of the data collection strategy by the data evaluation that is the purpose of the present invention, when a data evaluation result 800 by various forms of the network function is introduced, data may be viewed from multiple prospective. Further, since it is possible to avoid a biased result for a specific data type, it is easy to synthesize the results of the various models and perform an evaluation on the data. The data management method of the exemplary embodiment of the present disclosure may provide insight into a model configuration optimized from a data perspective and a model perspective by allowing a user to determine interference accuracy, training easiness, and the like for each data and each model.

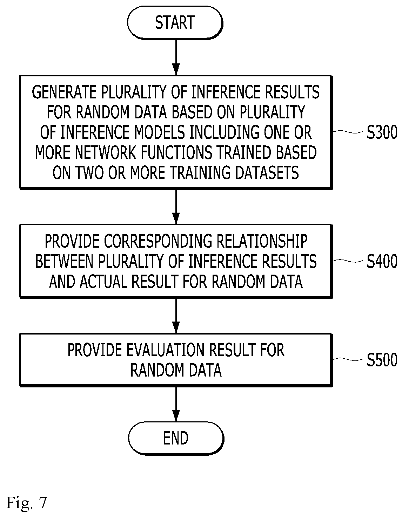

FIG. 7 is a flowchart illustrating an example in which the processor of the computing device establishes a data collection strategy according to an exemplary embodiment of the present disclosure.

Referring to FIG. 7, the processor 110 may generate a plurality of inference results 600 for random data based on a plurality of inference models 500 including one or more network functions trained based on two or more training datasets 400 (S300).

According to operation S300, for each of the data included in the entire dataset 300, an inference result for a classification value of each of the plurality of inference models 500 is generated. That is, inference model #1 500, inference model #2 500, ..., and inference model #NM 500 may generate the inference results for the classification values for data #1, data #2, data #3, ..., and data #N, respectively. Herein, the inference result may include a prediction label and a confidence score for a label prediction result.

Herein, the random data may be defined as one data randomly selected from the data included in the entire dataset 300.

The processor 110 may provide a plurality of inference results 600 for the generated random data and a corresponding relationship with an actual result (S400).

Herein, the actual result may mean ground truth data for the entire dataset 300. The actual result may mean an actually measured result for a target. For example, an actual result of a picture for a dog may be a dog. Since the label is basically only a classification value set by an observer for a target, the actual result may be different from the label.

According to several exemplary embodiments of the present disclosure, the corresponding relationship between the inference result and the actual result may be defined as the classification result itself or information related to the classification result. For example, the corresponding relationship may be a confidence score for the classification result.

As the processor 110 provides information on the corresponding relationship, it is possible to determine which type of data among the data included in the entire dataset 300 is not properly trained. Accordingly, the data collection strategy according to the present disclosure may be established by a user.

The processor 110 may provide an evaluation result 800 for the random data (S500).

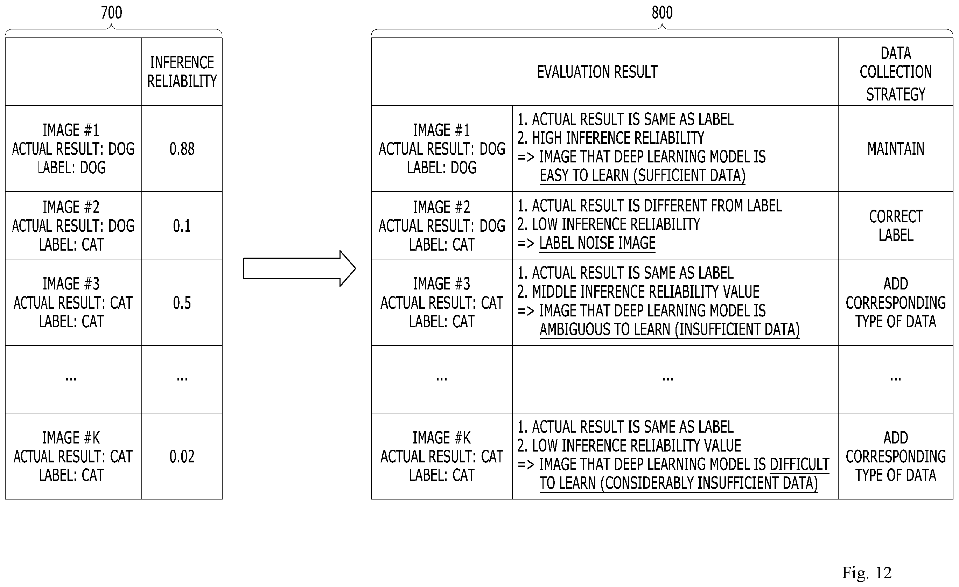

The processor 110 may present the evaluation result 800 for the random data, in addition to presenting the corresponding relationship between the actual result and the inference result of the random data. The evaluation result 800 may include the data collection strategy based on an analysis result, as well as an analysis based on the inference result, the label, and the actual result. This will be described in detail with reference to FIG. 12.

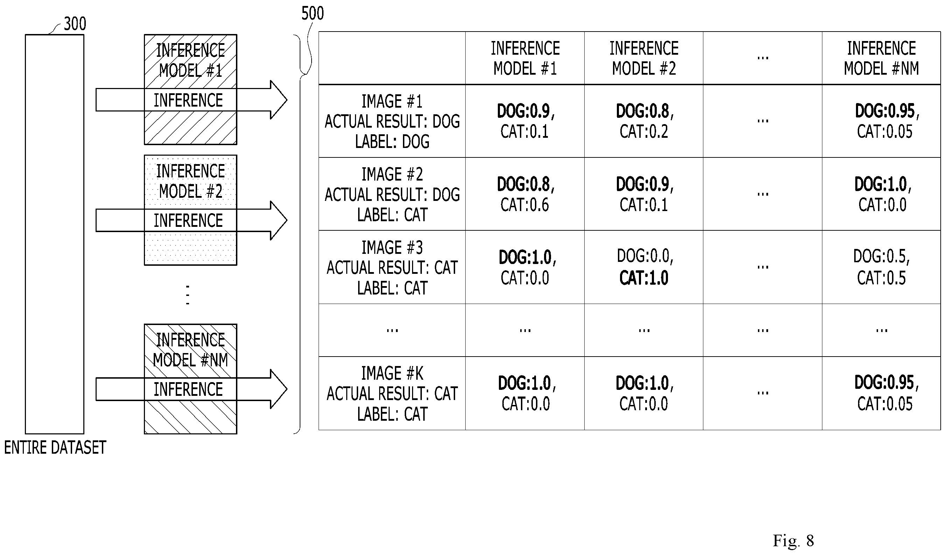

FIG. 8 is a diagram illustrating an example in which the processor of the computing device generates a plurality of inference results according to an exemplary embodiment of the present disclosure.

The plurality of inference results 600 generated by the processor 110 may be defined as the classification result inferred for each of the data included in the entire dataset 300 by the plurality of inference models 500. That is, inference model #1 500, inference model #2 500, ..., and inference model #NM 500 may generate the inference results for the classification values for data #1, data #2, data #3, ... and data #N, respectively. Herein, the inference result may include a prediction label and a confidence score for a label prediction result.

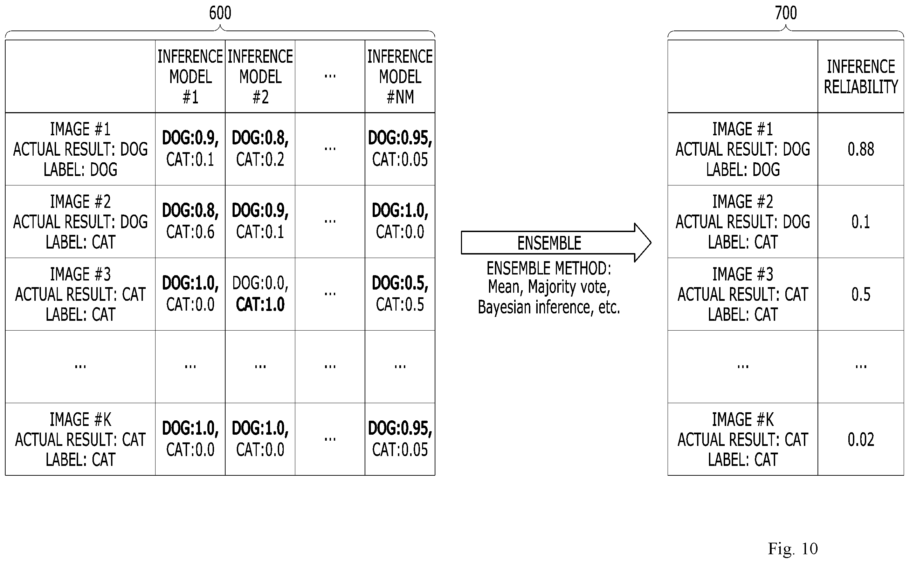

The processor 110 may generate a single inference result 700 or an inference reliability value by synthesizing the generated inference results. This will be described in detail with reference to FIG. 10.

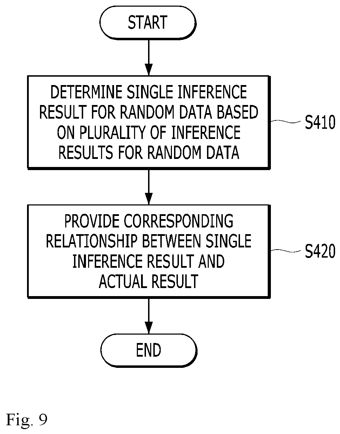

FIG. 9 is a flowchart illustrating an example in which the processor of the computing device provides a corresponding relationship between a plurality of inference results and an actual result for random data according to an exemplary embodiment of the present disclosure.

Referring to FIG. 9, the processor 110 may determine a single inference result 700 for the random data based on the plurality of inference results 600 for the random data (S410).

Herein, the single inference result 700 means one result generated for the random data based on the plurality of inference results 600 (or synthesizing the plurality of inference results 600). The single inference result 700 may be an inference reliability value for a label of the corresponding data. For example, in the case where a label of dog is attached to an object represented in a specific image, when an average of probabilities (reliability) that all of the plurality of inference models 500 predict the object illustrated in the corresponding data as a dog is 0.88, the single inference result 700 may be "0.88". The foregoing description is merely an example, and the present disclosure is not limited thereto.

Herein, the ensemble method may be defined as a method of creating several prediction models based on given data and creating one final prediction model by combining the several prediction models.

The processor 110 according to the present disclosure may use average, majority vote, Bayesian interference, and the like as a particular method for implementing the ensemble method.

As described above, when the single inference result 700 is generated by using the ensemble method and the like, it is known that better performance than that of the inference by the single model is exhibited. As the classification prediction result for the data is accurate, it may be possible to appropriately establish a data collection strategy.

The processor 110 may provide a corresponding relationship between the determined single inference result 700 and the actual result (S420).

According to several exemplary embodiments of the present disclosure, the corresponding relationship between the inference result and the actual result may be defined as the classification result itself or information related to the classification result. For example, the corresponding relationship may be a confidence value for the classification result.

As the processor 110 provides information on the corresponding relationship, it is possible to determine which type of data among the data included in the entire dataset 300 is not properly trained. Accordingly, the data collection strategy according to the present disclosure may be established by a user.

FIG. 10 is a diagram illustrating an example in which the processor of the computing device generates a confidence score according to an exemplary embodiment of the present disclosure.

Herein, the single inference result 700 means one result generated for the random data based on the plurality of inference results 600 (or synthesizing the plurality of inference results 600). The single inference result 700 may be an inference reliability value for a label of the corresponding data.

Referring to FIG. 10, the single inference result 700 for image #1 may be an inference reliability value of 0.88 for a dog.

As described above, the single inference result 700 using the ensemble method is known to exhibit better performance than that of the inference result by the single model, thereby establishing the more appropriate data collection strategy.

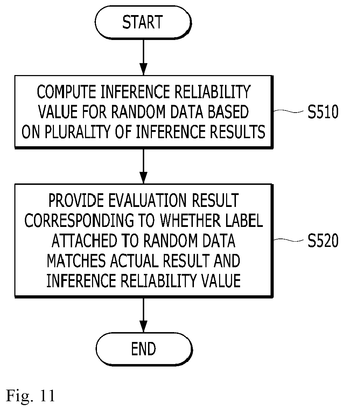

FIG. 11 is a flowchart illustrating an example in which the processor of the computing device provides an evaluation result for random data according to an exemplary embodiment of the present disclosure.

Referring to FIG. 11, the processor 110 may calculate an inference reliability value for the random data based on the plurality of inference results 600 (S510).

The processor 110 may provide an evaluation result 800 corresponding to whether the classification prediction result included in the inference result matches the actual result and the inference reliability value (S520).

The example of providing the evaluation result 800 based on the classification prediction result, the actual result, and the inference reliability value is described in detail with reference to FIG. 12.

FIG. 12 is a diagram illustrating an example in which the processor of the processor provides an evaluation result for random data according to an exemplary embodiment of the present disclosure.

The processor 110 may determine a single inference result 700 for the random data based on the plurality of inference results 600 for the random data. Further, the processor 110 may provide a corresponding relationship between the single inference result 700 and the actual result. The processor 110 may provide the evaluation result 800 for the random data, and the evaluation result 800 may be based on the plurality of inference results 600 and the actual result.

Hereinafter, the example in which the processor 110 of the computing device 100 provides the evaluation result 800 for the random data and establishes a data collection strategy is described. However, the contents presented below are merely an example for providing the evaluation result and establishing the data collection strategy, so that the providing the evaluation result and the establishing the data collection strategy are not limited thereto.

As illustrated in FIG. 12, the evaluation result 800 for the random data may be provided. The evaluation result 800 may include the result regarding whether the actual result matches the label and the level (high, middle, and low) of the inference reliability value. The level of the inference reliability value (high, middle, and low) may be determined by the inference reliability value and predetermined one or more threshold values.

The determination of the level of the inference reliability value will be described based on image #1, image #2, and image #3, which are the examples of the data illustrated in FIG. 12, as examples. The processor 110 according to the present disclosure may set a first threshold value for determining the level of the inference reliability value to 0.3 and a second threshold value to 0.8. In this case, 0.88 that is the inference reliability value of image #1 is larger than the second threshold value, so that the level of the inference reliability value of image #1 may be determined as "high", 0.1 that is the inference reliability value of image #2 is smaller than the first threshold value, so that the level of the inference reliability value of image #2 may be determined as "low", and 0.5 that is the inference reliability value of image #3 is larger than the first threshold value and is smaller than the second threshold value, so that the level of the inference reliability value of image #3 may be determined as "middle". The comparison of the inference reliability is merely an example, and the present disclosure is not limited thereto.

The evaluation data may be directly provided to a user or may be used as basic data for establishing the data collection strategy. The label may match or may not match the actual result, and the data collection strategy may include maintenance, label correction, and addition of the corresponding type of data. The maintenance may mean that no additional collection or processing of the corresponding type of data is not required. The label correction may mean that the attached label is different from the actual result and it is necessary to match the label to the actual result. The addition of the corresponding type of data may mean that an activity to additionally collect data similar to the corresponding data is required because learning of the specific type of data is not properly performed. In the exemplary embodiment of the present disclosure, the data similar to the corresponding data may include the data belonging to a classification glass of the corresponding data.

Referring to FIG. 12, the evaluation result 800 for the random data has the same label as that of the actual result, so that the evaluation result 800 may include the data of a high degree of inference reliability (a first type). In this case, the plurality of inference models 500 may be considered to be well trained to well predict the first type of data. Accordingly, the first type of data for training the plurality of inference models 500 may be evaluated to be sufficient. Accordingly, for the first type of data, the additional collection of data or the label correction is not required, so that the data collection strategy "maintenance" may be provided to the user. In the example of FIG. 12, image #1 may include a dog image (that is, the image in which the actual result (ground truth) is a dog image) and include a dog label. For image #1, the inference model may classify the probability that image #1 includes a dog to the inference reliability of 0.88. In this case, image #1 has the matched actual result and label and the inference model estimates image #1 to have high inference reliability, so that image #1 may be classified as the first type of data which the inference model easily learns and has the sufficient training data. The foregoing inference reliability is merely an example, and the present disclosure is not limited thereto.

The processor 110 may tag the data collection strategy provided for the first type of data. For example, tags, such as "maintenance", "weighted value assignment", "data augmentation performance" and the like may be attached to image #1 of FIG. 12. The processor 110 may not take any measure for image #1 or assign a weighted value to the corresponding data in training based on the tag for the data collection strategy attached to image #1, and may also additionally generate a similar image by performing data augmentation based on image #1.

The evaluation result 800 for the random data may include the type of data (a second type) in which the actual result is different from the label and inference reliability is low. This case may be the case where the label is wrong. Accordingly, the plurality of inference models 500 may be determined to show high inference reliability for the actual result. In this case, the data may be the type of data in which only the label is wrong, and with which the plurality of inference models 500 is well trained. Accordingly, in this case, the data collection strategy of "label correction" may be provided.

The processor 110 may determine that the actual result is different from the label for the data of which inference reliability is equal to or lower than a predetermined threshold value. Herein, the predetermined threshold value may be a threshold value remarkably smaller than a threshold value for classifying the data to a corresponding class based on the inference result. For example, when the data having inference reliability of 0.9 or more is classified into a corresponding class, a threshold value of inference reliability for determining, by the processor 110, that the label is different from the actual result may be 0.1 or less. That is, the threshold value for determining whether the label is different from the actual result may be smaller than the threshold value for determining that the inference reliability is low due to lack of training data and the like.

In the case where inference reliability for another data belonging to the class of the label of the corresponding data is equal to or larger than the predetermined threshold value, the processor 110 may determine that the label of the corresponding data is different from the actual result for the data of which inference reliability is equal to or lower than the predetermined threshold value. That is, when inference reliability for another data belonging to the class of the corresponding data is high, it may be determined that the training is well performed for the corresponding class, but when inference reliability is low only for the corresponding data, the actual result may be different from the label.

In the example of FIG. 12, image #2 may include, for example, a dog image and include a cat label. The inference model may classify image #2 to have inference reliability in which a probability that image #2 includes a cat is 0.1. In this case, in image #2, the actual result does not match the label, so that the inference model estimates image #2 to have low inference reliability, so that it may be understood that it is not easy for the inference model to learn image #2. Accordingly, the processor 110 may classify image #2 into the second type of data in which a label error is generated. The foregoing inference reliability is merely an example, and the present disclosure is not limited thereto.

It may be considered that in the data classified into the second type of data, the label does not match the actual result. Accordingly, the correction of the label for the second type of data may be considered during the training. Further, the processor 110 may tag the data collection strategy provided for the second type of data. For example, the tag of "label correction" may be attached to image #2 of FIG. 12. In this case, the processor 110 may provide a user with the data attached with the tag of label correction and the like to make the label be corrected. Further, in this case, when inference reliability for another class is equal to or larger than a predetermined threshold value, the processor 110 may determine a label of another class as a pseudo label of the corresponding data.

The second type of data may negatively affect the training performance of the inference model because the actual result is different from the label, so that the second type of data may also be excluded in the training by evaluating a value of the second type of data in the training.

The particular description for the excluding the training data in the training by evaluating the training data is discussed in "Data Dropout: Optimizing Training Data for Convolutional Neural Networks", Wang et al., of which the entire contents are incorporated as the reference in the present application, in more detail.

The evaluation result 800 for the random data may include the type of data (a third type) in which inference reliability is low or middle because the actual result is different from the label. In this case, it may be determined that the plurality of inference models 500 is not sufficiently trained yet. Accordingly, for the foregoing type of data, the data collection strategy of the "addition of the corresponding type of data" may be provided for the additional training.

In the example of FIG. 12, image #3 may include, for example, a cat image and may include a cat label. The inference model may classify the probability that image #3 includes a cat to the inference reliability of 0.5. In this case, for image #3, the actual result matches the label, and the inference model estimates image #3 to have low inference reliability, so that it may be understood that it is not easy for the inference model to learn image #3. Accordingly, the processor 110 may classify image #3 into the third type of data in which the addition of the corresponding type of data is required. The foregoing inference reliability is merely an example, and the present disclosure is not limited thereto.

For the data in which the inference reliability is equal to or lower than the predetermined threshold value, the processor 110 may determine that the training of the inference model is insufficient for the corresponding data. For example, for the data in which the inference reliability is equal to or lower than the predetermined threshold value, the processor 110 may determine that the data of the corresponding class is insufficient based on the number of another data belonging to the class of the label of the data of which the inference reliability is equal to or lower than the predetermined threshold value, a ratio of the data having the label of the corresponding class to the entire dataset, and the like. That is, when the inference reliability is low, the number of data may be small or the label may be wrong, so that the processor 110 may determine that the data of the corresponding class is insufficient based on the number of other data of the corresponding class.

It may be considered that in the data classified into the third type of data, the data for the training is insufficient. Accordingly, during the training, for the third type of data, the assignment of a weighted value or the performance of data augmentation may be considered as well as the additional data collection. Further, the processor 110 may tag the data collection strategy provided for the third type of data. For example, tags, such as "assignment of weighted value", "data augmentation performance", "additional data collection", and the like may be attached to image #3 of FIG. 12. The assignment of the weighted value to the data classified into the third type of data may also more rapidly converge the error for the data belonging to the corresponding class by setting a learning rate to be high during the learning of the data belonging to the corresponding class.

Through the foregoing description, a user using the method of establishing the data collection strategy according to the present disclosure may determine additional processing for the currently possessed data. For example, according to the tag attached to the data classified into the third type of data, the assignment of the weighted value, the data augmentation, and the like may be performed on the third type of data and the data similar to the third type of data. Accordingly, it is possible to efficiently collect data for training artificial intelligence and deep learning models.

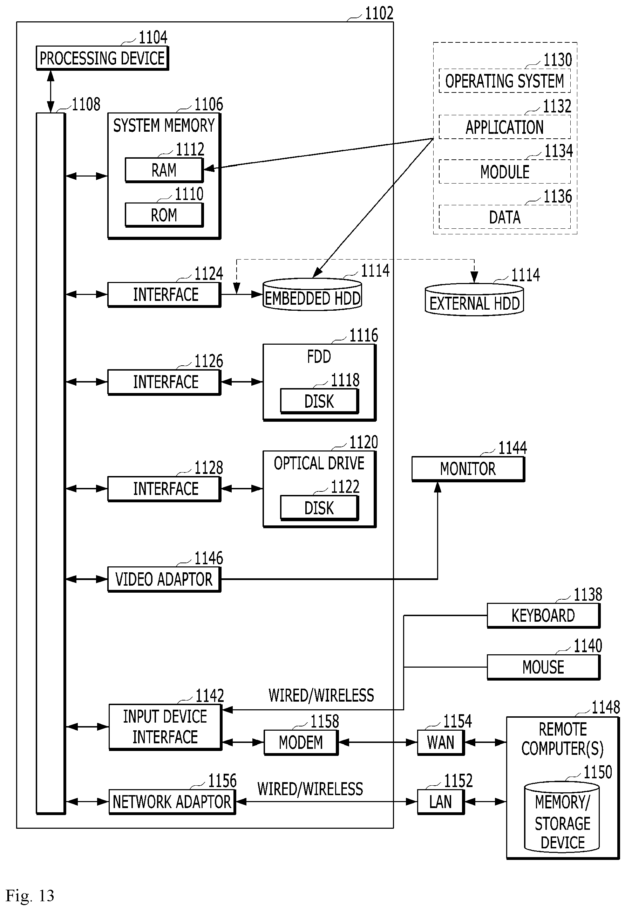

FIG. 13 is a simple and general schematic diagram for an example of a computing environment in which several exemplary embodiments of the present disclosures are implementable.

A computer 1102 illustrated in FIG. 13 may correspond to at least one of the computing devices 100 in which the method of establishing the data collection strategy according to the present disclosure is performed.

The present disclosure has been generally described in relation to a computer executable command executable in one or more computers, but those skilled in the art will appreciate well that the present disclosure is combined with other program modules and/or be implemented by a combination of hardware and software.

In general, a module in the present specification includes a routine, a procedure, a program, a component, a data structure, and the like performing a specific task or implementing a specific abstract data form. Further, those skilled in the art will appreciate well that the method of the present disclosure may be carried out by a personal computer, a hand-held computing device, a microprocessor-based or programmable home appliance (each of which may be connected with one or more relevant devices and be operated), and other computer system configurations, as well as a single-processor or multiprocessor computer system, a mini computer, and a mainframe computer.

The exemplary embodiments of the present disclosure may be carried out in a distributed computing environment, in which certain tasks are performed by remote processing devices connected through a communication network. In the distribution computing environment, a program module may be positioned in both a local memory storage device and a remote memory storage device.

The computer generally includes various computer readable media. The computer readable medium is a computer accessible medium, and includes volatile and non-volatile media, transitory and non-transitory media, and portable and non-portable media. As a non-limited example, the computer readable medium may include a computer readable storage medium and a computer readable transmission medium.

The computer readable storage medium includes volatile and non-volatile media, transitory and non-transitory media, and portable and non-portable media constructed by a predetermined method or technology, which stores information, such as a computer readable command, a data structure, a program module, or other data. The computer readable storage medium includes a Random Access Memory (RAM), a Read-Only Memory (ROM), an Electrically Erasable and Programmable ROM (EEPROM), a flash memory, or other memory technologies, a Compact Disc (CD)-ROM, a Digital Video Disk (DVD), or other optical disk storage devices, a magnetic cassette, a magnetic tape, a magnetic disk storage device, or other magnetic storage devices, or other predetermined media, which are accessible by a computer and are used for storing desired information, but is not limited thereto.

The computer readable transport medium implements a computer readable command, a data structure, a program module, or other data in a modulated data signal, such as a carrier wave or other transport mechanisms, and generally includes all of the information transport media. The modulated data signal means a signal, of which one or more of the characteristics are set or changed to encode information within the signal. As a non-limited example, the computer readable transport medium includes a wired medium, such as a wired network or a direct-wired connection, and a wireless medium, such as sound, radiofrequency (RF), infrared rays, and other wireless media. A combination of the predetermined media among the foregoing media is also included in a range of the computer readable transport medium.

An illustrative environment 1100 including a computer 1102 and implementing several aspects of the present disclosure is illustrated, and the computer 1102 includes a processing device 1104, a system memory 1106, and a system bus 1108. The system bus 1108 connects system components including the system memory 1106 (not limited) to the processing device 1104. The processing device 1104 may be a predetermined processor 110 among various commonly used processors 110. A dual-processor 110 and other multi-processor 110 architectures may also be used as the processing device 1104.

The system bus 1108 may be a predetermined one among several types of bus structure, which may be additionally connectable to a local bus using a predetermined one among a memory bus, a peripheral device bus, and various common bus architectures. The system memory 1106 includes a ROM 1110, and a RAM 1112. A basic input/output system (BIOS) is stored in a non-volatile memory 1110, such as a ROM, an erasable and programmable ROM (EPROM), and an EEPROM, and the BIOS includes a basic routine helping a transport of information among the constituent elements within the computer 1102 at a specific time, such as starting. The RAM 1112 may also include a high-rate RAM, such as a static RAM, for caching data.

The computer 1102 also includes an embedded hard disk drive (HDD) 1114 (for example, enhanced integrated drive electronics (EIDE) and serial advanced technology attachment (SATA)) - the embedded HDD 1114 being configured for outer mounted usage within a proper chassis (not illustrated) - a magnetic floppy disk drive (FDD) 1116 (for example, which is for reading data from a portable diskette 1118 or recording data in the portable diskette 1118), and an optical disk drive 1120 (for example, which is for reading a CD-ROM disk 1122, or reading data from other high-capacity optical media, such as a DVD, or recording data in the high-capacity optical media). A hard disk drive 1114, a magnetic disk drive 1116, and an optical disk drive 1120 may be connected to a system bus 1108 by a hard disk drive interface 1124, a magnetic disk drive interface 1126, and an optical drive interface 1128, respectively. An interface 1124 for implementing an outer mounted drive includes, for example, at least one of or both a universal serial bus (USB) and the Institute of Electrical and Electronics Engineers (IEEE) 1394 interface technology.

The drives and the computer readable media associated with the drives provide non-volatile storage of data, data structures, computer executable commands, and the like. In the case of the computer 1102, the drive and the medium corresponds to the storage of random data in an appropriate digital form. In the description of the computer readable storage media, the HDD, the portable magnetic disk, and the portable optical media, such as a CD, or a DVD, are mentioned, but those skilled in the art will well appreciate that other types of compute readable storage media, such as a zip drive, a magnetic cassette, a flash memory card, and a cartridge, may also be used in the illustrative operation environment, and the predetermined medium may include computer executable commands for performing the methods of the present disclosure.

A plurality of program modules including an operating system 1130, one or more application programs 1132, other program modules 1134, and program data 1136 may be stored in the drive and the RAM 1112. An entirety or a part of the operation system, the application, the module, and/or data may also be cached in the RAM 1112. It will be appreciated well that the present disclosure may be implemented by several commercially usable operation systems or a combination of operating systems.

A user may input a command and information to the computer 1102 through one or more wired/wireless input devices, for example, a keyboard 1138 and a pointing device, such as a mouse 1140. Other input devices (not illustrated) may be a microphone, an IR remote controller, a joystick, a gamepad, a stylus pen, a touch screen, and the like. The foregoing and other input devices are frequently connected to the processing device 1104 through an input device interface 1142 connected to the system bus 1108, but may be connected by other interfaces, such as a parallel port, an IEEE 1394 serial port, a game port, a USB port, an IR interface, and other interfaces.

A monitor 1144 or other types of display devices are also connected to the system bus 1108 through an interface, such as a video adaptor 1146. In addition to the monitor 1144, the computer generally includes other peripheral output devices (not illustrated), such as a speaker and a printer.

The computer 1102 may be operated in a networked environment by using a logical connection to one or more remote computers, such as remote computer(s) 1148, through wired and/or wireless communication. The remote computer(s) 1148 may be a work station, a server computer, a router, a personal computer, a portable computer, a microprocessor-based entertainment device, a peer device, and other general network nodes, and generally includes some or an entirety of the constituent elements described for the computer 1102, but only a memory storage device 1150 is illustrated for simplicity. The illustrated logical connection includes a wired/wireless connection to a local area network (LAN) 1152 and/or a larger network, for example, a wide area network (WAN) 1154. The LAN and WAN networking environments are general in an office and a company, and make an enterprise-wide computer network, such as an Intranet, easy, and all of the LAN and WAN networking environments may be connected to a worldwide computer network, for example, the Internet.

When the computer 1102 is used in the LAN networking environment, the computer 1102 is connected to the local network 1152 through a wired and/or wireless communication network interface or an adaptor 1156. The adaptor 1156 may make wired or wireless communication to the LAN 1152 easy, and the LAN 1152 also includes a wireless access point installed therein for the communication with the wireless adaptor 1156. When the computer 1102 is used in the WAN networking environment, the computer 1102 may include a modem 1158, is connected to a communication server on a WAN 1154, or includes other means setting communication through the WAN 1154 via the Internet. The modem 1158, which may be an embedded or outer-mounted and wired or wireless device, is connected to the system bus 1108 through a serial port interface 1142. In the networked environment, the program modules described for the computer 1102 or some of the program modules may be stored in a remote memory/storage device 1150. The illustrated network connection is illustrative, and those skilled in the art will appreciate well that other means setting a communication link between the computers may be used.

The computer 1102 performs an operation of communicating with a predetermined wireless device or entity, for example, a printer, a scanner, a desktop and/or portable computer, a portable data assistant (PDA), a communication satellite, predetermined equipment or place related to a wirelessly detectable tag, and a telephone, which is disposed by wireless communication and is operated. The operation includes a wireless fidelity (Wi-Fi) and Bluetooth wireless technology at least. Accordingly, the communication may have a pre-defined structure, such as a network in the related art, or may be simply ad hoc communication between at least two devices.

The Wi-Fi enables a connection to the Internet and the like even without a wire. Wi-Fi is a wireless technology, such as a cellular phone, which enables the device, for example, the computer, to transmit and receive data indoors and outdoors, that is, in any place within a communication range of a base station. A Wi-Fi network uses a wireless technology, which is called IEEE 802.11 (a, b, g, etc.) for providing a safe, reliable, and high-rate wireless connection. The Wi-Fi may be used for connecting the computer to the computer, the Internet, and the wired network (IEEE 802.3 or Ethernet is used). The Wi-Fi network may be operated at, for example, a data rate of 11 Mbps (802.11a) or 54 Mbps (802.11b) in an unauthorized 2.4 and 5 GHz wireless band, or may be operated in a product including both bands (dual bands).

Those skilled in the art will appreciate that the various illustrative logical blocks, modules, processors 110, means, circuits, and algorithm operations described in relation to the exemplary embodiments disclosed herein may be implemented by electronic hardware (for convenience, called "software" herein), various forms of program or design code, or a combination thereof. To clearly describe compatibility of the hardware and the software, various illustrative components, blocks, modules, circuits, and operations are generally illustrated above in relation to the functions of the hardware and the software. Whether the function is implemented as hardware or software depends on design limits given to a specific application or an entire system. Those skilled in the art may perform the function described by various schemes for each specific application, but it shall not be construed that the determinations of the performance depart from the scope of the present disclosure.

Various exemplary embodiments presented herein may be implemented by a method, a device, or a manufactured article using standard programming and/or engineering technology. A term "manufactured article" includes a computer program, a carrier, or a medium accessible from a predetermined computer-readable device. For example, the computer-readable storage medium includes a magnetic storage device (for example, a hard disk, a floppy disk, and a magnetic strip), an optical disk (for example, a CD and a DVD), a smart card, and a flash memory device (for example, an EEPROM, a card, a stick, and a key drive), but is not limited thereto. A term "machine-readable medium" includes a wireless channel and various other media, which are capable of storing, holding, and/or transporting a command(s) and/or data, but is not limited thereto.

It shall be understood that a specific order or a hierarchical structure of the operations included in the presented processes are an example of illustrative accesses. It shall be understood that a specific order or a hierarchical structure of the operations included in the processes may be re-arranged within the scope of the present disclosure based on design priorities. The accompanying method claims provide various operations of elements in a sample order, but it does not mean that the claims are limited to the presented specific order or hierarchical structure.

The description of the presented exemplary embodiments is provided so as for those skilled in the art to use or carry out the present disclosure. Various modifications of the exemplary embodiments may be apparent to those skilled in the art, and general principles defined herein may be applied to other exemplary embodiments without departing from the scope of the present disclosure. Accordingly, the present disclosure is not limited to the exemplary embodiments suggested herein, and shall be interpreted within the broadest meaning range consistent to the principles and new characteristics suggested herein.

## Claims

1. A non-transitory computer readable medium storing a computer program, wherein the computer program comprising instructions for causing one or more processors to perform the following steps, the steps comprising:
generating two or more training dataset from an entire dataset - wherein each of the two or more training dataset includes at least one pair of a sampled dataset, and wherein each of at least one pair of sampled dataset includes different data subset -; and
training a plurality of inference models including one or more network functions, based on the two or more training dataset.

2. The non-transitory computer readable medium according to claim 1, wherein each of the two or more training dataset includes a training dataset and a validation dataset.

3. The non-transitory computer readable medium according to claim 1 or 2, wherein the generating two or more training dataset from entire dataset comprises:
dividing the entire dataset into M subsets; and
allocating at least one subset of the divided M subsets as a test dataset.

4. The non-transitory computer readable medium according to any one of claims 1 to 3, wherein the generating two or more training dataset from entire dataset comprises:
allocating random data, which is randomly selected not to include same data, as test dataset.

5. The non-transitory computer readable medium according to claims 3 or 4, wherein the generating two or more training dataset from entire dataset comprises:
dividing a dataset, excluding the test dataset among the entire dataset, into N subsets; and
allocating at least one subset of the divided N subsets as a validation dataset.

6. A non-transitory computer readable medium storing a computer program, wherein the computer program comprising instructions for causing one or more processors to perform the following steps, the steps comprising:
generating a plurality of inference results of a random data, based on a plurality of inference models including one or more network functions which are trained based on two or more training data; and
providing a corresponding relationship between a plurality of inference results and ground truth of the random data.

7. The non-transitory computer readable medium according to claim 6, wherein the inference result includes a classification result that the inference model infers about the random data, and a confidence score which is related to the classification result.

8. The non-transitory computer readable medium according to claim 6 or 7, wherein the providing a corresponding relationship between a plurality of inference results and ground truth of the random data comprises:
determining a single inference result for the random data based on a plurality of inference results for the random data; and
providing a corresponding relationship between the single inference result and the ground truth.

9. The non-transitory computer readable medium according to any one of claims 6 to 8, wherein the steps further comprise:
providing an evaluation result of the random data.

10. The non-transitory computer readable medium according to claim 9, wherein the providing an evaluation result of the random data comprises:
providing the evaluation result of the random data, based on the plurality of inference results and corresponding ground truth.

11. The non-transitory computer readable medium according to claim 9 or 10, wherein the providing the evaluation result of the random data, based on the plurality of inference results and corresponding ground truth comprises:
computing an inference reliability value of the random data, based on the plurality of inference results; and
providing an evaluation result corresponding to whether a label labeled to the random data corresponds to the ground truth and corresponding to the inference reliability value.

12. The non-transitory computer readable medium according to any one of claims 6 to 11, wherein the plurality of inference models includes two or more network functions including different forms.

13. A computing device for establishing a data collection strategy, comprising:
a processor;
a network unit; and
a storage unit;
wherein the processor is configured to:
generate two or more training dataset from an entire dataset - wherein each of the two or more training dataset includes at least one pair of a sampled dataset, and wherein each of at least one pair of sampled dataset includes different data subset -; and
train a plurality of inference models including one or more network functions, based on the two or more training dataset.

14. A computing device for establishing a data collection strategy, comprising:
a processor;
a network unit; and
a storage unit;
wherein the processor is configured to:
generate a plurality of inference results of a random data, based on a plurality of inference models including one or more network functions which are trained based on two or more training data; and
provide a corresponding relationship between a plurality of inference results and ground truth of the random data.
